# EUROPEAN PATENT APPLICATION

(11) **EP 1 433 376 A1**
(43) Date of publication of application: **30.06.2004**
(21) Application number: 02028983.1
(22) Date of filing: 27.12.2002
(51) Int. Cl.: A01G 9/02

(54) **Frame for elevated cultivation device**

(71) Applicant: Aglis Co., Ltd., Yame-shi, Fukuoka (JP)
(72) Inventor: Nakamura, Hiroyuki, c/oAglis Co., Ltd., Yame-shi, Fukuoka (JP)
(74) Representative: Gille Hrabal Struck Neidlein Prop Roos

(57) **Abstract**

The present invention is to provide a frame for an elevated cultivation device for growing strawberries, which is easy to transport and install, has excellent stability without submerging, and can handle excessive water favorably.

Frame 1 for an elevated cultivation device is constructed having a plurality of appropriately spaced standing frames 2 arranged in a standing condition, and cultivation bed-supporting members 3 and a gutter 4 span between the standing frames 2. At this time, each standing frame 2 is assembled in the following manner. That is, a base bar 5 mounted with submerging prevention materials 10 placing on the ground and fixing by anchors. Then, two detachable pole members 6 are arranged on the base bar in a standing condition in a tapered form toward the top, central cultivation bed-forming member 7 is fitted to the upper ends of the respective detachable pole members 6, and side cultivation bed-forming members 8 and 9 on the right and left sides are fitted by latching to the central cultivation bed-forming member 7. Collect-supporting members 17 and 31 protrudes in each of the cultivation bed-forming members 7, 8 and 9, and gutter supporting sections 21 and 32 are formed on each bottom thereof.

## Description

### BACKGROUND OF THE INVENTION

### Field of the Invention

The present invention relates to an elevated cultivation device for installing cultivation beds for cultivating vegetables such as tomatoes, fruit such as strawberry, flowers and other plants at an adequate height from the ground. More specifically, the present invention relates to a frame for supporting the cultivation beds.

### Related Art Statement

Elevated cultivation has recently become popular; mainly for the cultivation of strawberries, and size of the elevated cultivation devices are becoming large. One of the reasons for the popularity is because working on the elevated cultivation is easy, for instance, people do not need to stoop to pick up strawberries. Also, arranging the cultivation beds higher than the ground level, namely, elevated from the ground, prevents farm products from catching diseases including Mildew, Anthracnose and Botrytis, and consequently, lessen the amount of chemical used for the prevention. Furthermore, since the products cultivated on the elevated cultivation device do not touch the ground directly, the products are highly hygienic, particularly it serves a good environment to cultivate strawberries, eaten soon after berrying.

In the Japanese Unexamined Utility Model Publication No. Hei 6-75128, for example, a cultivation device is disclosed having a construction such that the poles of the leg members supporting the cultivation beds are buried in the ground, film-holding pipes span between the leg members in two lines, fixed to each leg member, a plastic sheets spans between said film-holding pipes in a U-shape (cross section), and culture soil is filled within said U-shape to thereby form the cultivation bed.

In the elevated cultivation device having such a construction, however, burying the poles of the leg members in the ground one by one in an upright position requires a lot of labor, particularly, in an area containing many stones and rocks. Taking it into consideration, for instance, the Japanese Unexamined Patent Publication No. Hei 12-83478 proposes an elevated cultivation device having a unit-type structure having a ground frame provided with appropriately spaced pole-supporting sections in the longitudinal side, a plurality of poles, and sheet-holding rods provided with pole-connecting sections with the same space between as that of the pole-supporting section, wherein poles are detachably arranged in a standing condition in the pole supporting section in the ground frame , and the upper ends of the poles and the said pole-connecting sections are detachably connected to thereby arrange the sheet holding bars on the poles.

### SUMMARY OF THE INVENTION

The present invention aims to provide a frame for an elevated cultivation device which is easy to transport and install, and having a stable structure.

To achieve the object, the present invention is a frame for an elevated cultivation device comprising a plurality of appropriately spaced standing frames arranged in a standing condition, and cultivation bed-supporting members span between the standing frames, wherein each standing frame has a ground base member placed on the ground, detachable pole members arranged in a standing condition on said ground base member, and detachable cultivation bed-forming members supported by said detachable pole members.

The frame for the elevated cultivation device having such a structure can be assembled in such a manner that the ground base member is placed on the ground, the detachable pole members are arranged in a standing condition on the said ground base member, and the cultivation bed-forming members are mounted on the detachable pole member. Therefore, it is easy to transport, since there is no heavy ground frame as disclosed in the Japanese Unexamined Patent Publication No. Hei 12-83478. Moreover, since each standing frame can be installed independently, even a large-scale frame is easily installed with a few people. Furthermore, the ground base member placed on the ground can prevent the standing frame from becoming submerged.

### BRIEF DESCRIPTION OF DRAWINGS

Fig. 1 is a partial perspective view showing a configuration example of a frame (with a collect sheet) according to one embodiment of the present invention;
Fig. 2 is a front elevation showing a configuration example of a standing frame constituting the frame shown in Fig. 1;
Fig. 3 is a perspective view showing one example in which a length-adjusting mechanism provided in a ground base member;
Fig. 4 is a front elevation showing a broken upper portion of the standing frame shown in Fig. 2;
Fig. 5 is a cross section showing a mounting structure of a side cultivation bed-forming member on a detachable pole member;
Fig. 6 is a front elevation showing a configuration example of a standing frame of an elevated cultivation device according to one embodiment;
Fig. 7A is an upper view showing one example of a collect-supporting member, and 7B is a partial cross section showing the state in which a collect sheet adheres to the collect-supporting member;
Fig. 8 is a front elevation showing one configuration example in which a supporting arm protrudes from the intermediate part of a collect portion, so that the angle of the collect-supporting member can be optionally adjusted;
Fig. 9 is large-scale front elevation showing the operation mode of the collect-supporting member shown in Fig. 8;
Fig. 10 is a front elevation showing a configuration example of a standing frame in which a modified example of a gutter-supporting section in the standing frame shown in Fig. 2 is added;
Fig. 11 is a front elevation showing one example in which a standing frame is covered with a weather-resistant sheet; and
Fig. 12 is a large-scale cross section showing a configuration example of a fixed portion of the weather-resistant sheet.

### DETAILED DESCRIPTION OF THE INVENTION

The frame for an elevated cultivation device of the present invention is constructed such that a plurality of appropriately spaced standing frames is arranged in a standing condition, and each standing frame has a ground base member placed on the ground, detachable pole members arranged in a standing condition on said ground base member, and a detachable cultivation bed-forming member supported by the detachable pole member.

In the above structure, the ground base member comprises a pole supporting section that can detachably support the lower end of the detachable pole member so as to be arranged in a standing condition, and the cultivation bed-forming member may comprise a pole-mounting section to which the upper end of the detachable pole member can be detachably fitted by insertion. This construction enables the frame to be easily assembled without welding, wire binding, or any other special tools or fastening devices.

The ground base member has a construction providing anchor-driving holes. Therefore, anchors (stakes) preventing from a collapse can be driven into said anchor-driving holes, to thereby secure the ground base member on the ground. Each independently-fixed standing frame ensures the strength d without adding a brace, and thus the construction is easy. Moreover, it has the great advantage in terms of construction that the driving itself is easy compared to the case where the detachable pole member is driven into the ground as in the conventional method, and it unnecessarily adjust the driving depth. Also, since the anchor is easily pulled out compared to the pole, the positioning and dismantlement of the fixed standing frame can be easily performed.

It is also possible to provide a submerging prevention material-mounting section in the ground base member, and mount a submerging prevention material on said submerging prevention material-mounting section along the ground. By having such a construction, each standing frame can be prevented from being submerged more reliably.

The detachable pole member can be arranged in a standing condition substantially vertically on the ground base member, or two detachable pole members may be arranged in a standing condition in a tapered form toward the top. By arranging the detachable pole members in a standing condition in a tapered form toward the top, the ground base member, the detachable pole members and the cultivation bed-forming member are arranged in a triangle or a trapezoid shape. As a result, the framework strength in each standing frame will be increased. As described below, in the case where side cultivation beds are provided below a central cultivation bed, it has the great advantage that sunshine can be ensured onto the side cultivation beds.

Alternatively, a length-adjusting mechanism can be provided in the ground base member, which enables the length of the ground base member and the space between the pole-supporting sections adjusted.

Arranging the detachable pole members in a standing condition in a tapered form toward the top changes the space between the lower ends of the detachable pole members with a change in the length of the detachable pole members. However, if a ground base member having such a length-adjusting mechanism is applied, the length of the ground base member need only be adjusted so as to match the space between the lower ends of the detachable detachable pole members without cutting or machining pipes or the like as the detachable detachable pole member. As a result, the overall height of the frame for the elevated cultivation device can be easily changed to an adequate height by changing the length of the detachable pole member, and thus, the frame for the elevated cultivation device having a desired height will be easily provided at a low price. Further, assembly of the frame for the elevated cultivation device becomes easy.

In the frame for the elevated cultivation device having the above construction, a side cultivation bed-forming member may be also added to the cultivation bed-forming member (a central cultivation bed-forming member in the embodiment). The side cultivation bed-forming member can be provided with a detachable pole member-mounting section and a latching section on the left or right side of the main body, so that the latching section is latched to the cultivation bed-forming member, and the detachable pole member-mounting section is mounted to the intermediate part of the detachable pole member so as to be freely detachable.

It is also possible to construct the frame for the elevated cultivation device such that a collect-supporting member to support fruit protrudes on the cultivation bed-forming member or the side cultivation bed-forming member, or on both, and a sheet latching section is provided on the surface of said collect-supporting member.

By protruding the collect-supporting member on the cultivation bed-forming member (including the side cultivation bed-forming member), fruit can grow on the collect-supporting member, preventing a runner (stem) from being broken due to the weight of the fruit. In this case, if the sheet latching section is provided on the surface of the collect-supporting member, holes in the collect sheet can be engaged therewith to thereby suppress a shift of the sheet.

The above-described collect-supporting member may be constructed with the tilt angle adjustable. If it is constructed so that the tilt angle is adjustable, the tilt angle of the collect portion of the collect-supporting member will be adjustable corresponding to the sunshine angle or the degree of growth of fruit, and therefore, the growth of the fruit will be further promoted.

To construct the collect-supporting member so as to be adjustable to the tilt angle, for example, the collect-supporting member can be consists of a collect portion, a fitting and holding part provided at the base of the collect portion and rotatably attached, and a supporting arm protrudes from the intermediate part of the collect portion at an appropriate angle to be adjustable to the length. By having such a construction, the fitting and holding part is rotatably attached to the cultivation bed-forming member, the tilt angle of the collect-supporting member is adjusted, the length of the supporting arm is adjusted so as to match with the tilt angle, and the tip portion of the supporting arm is abutted against the side of the cultivation bed, that is, the outside of the collect sheet and fixed. Therefore, the collect-supporting member can be fixed and supported by the supporting arm, and the tilt angle of the collect portion can be easily changed, and the structure thereof can be made simple.

Here, it is also possible not to provide the sheet-latching section on the surface of the collect-supporting member, or not to attach the collect-supporting member to a construction.

The cultivation bed-forming member or the side cultivation bed-forming member, or both may have a gutter-supporting section at the bottom thereof, to arrange a gutter along the bottom of the cultivation bed. In the case where the gutter is arranged along the bottom of the cultivation bed to thereby drain of excess irrigational water (excess water) and cultivation nutritious liquid to the outside of a hothouse, an increase of humidity in the hothouse can be suppressed, thereby enabling prevention of occurrence of disease due to an increase of humidity, and reduction of the operation load in the house.

The embodiment of the present invention will now be described by way of

### Examples.

### (Frame 1 for the elevated cultivation device)

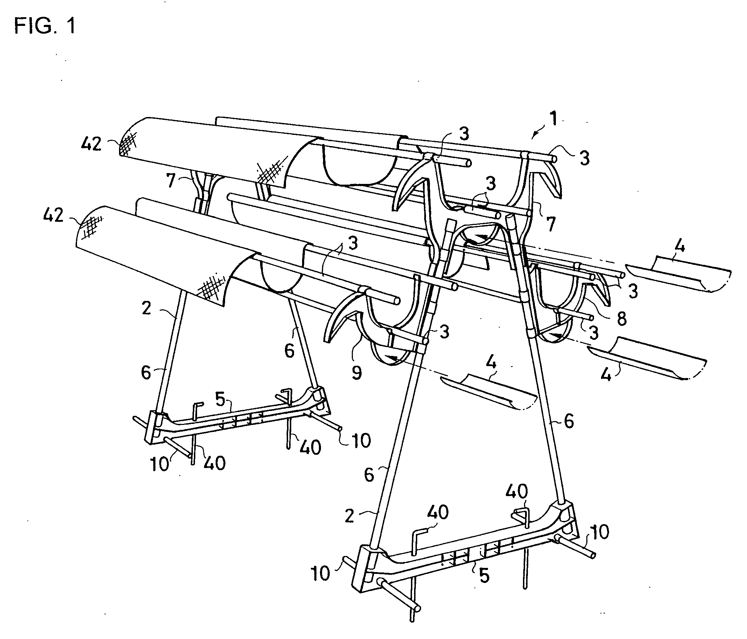

Frame 1 for the elevated cultivation device according to the embodiment (hereinafter referred to as "frame 1") can be installed that, as shown in Fig. 1, a plurality of appropriately spaced standing frames 2 are arranged in a standing condition parallel with each other, and cultivation bed supporting members 3 and a gutter 4 span between the standing frames 2.

### (Standing frame 2)

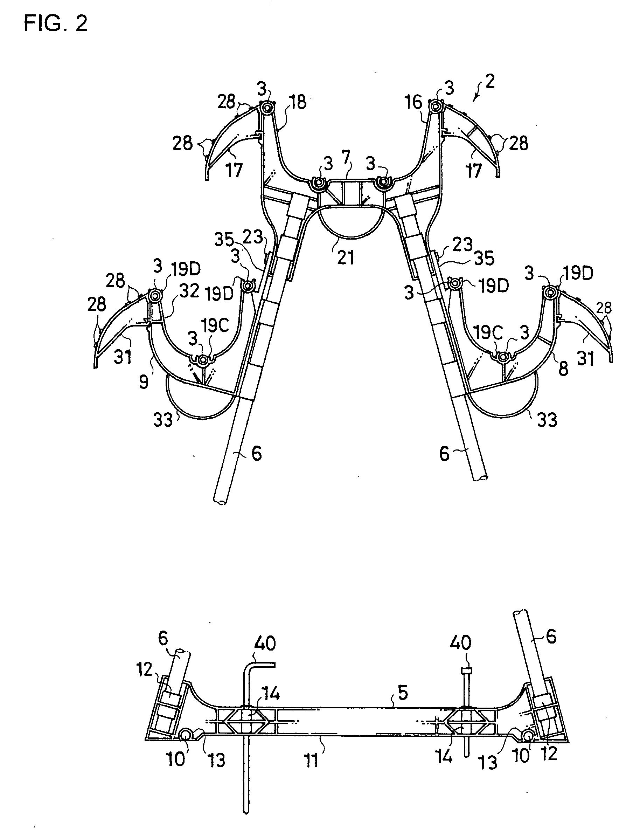

Each standing frame 2 comprises, as shown in Figs. 1 and 2, a base bar 5 as a ground base member placed on the ground, two detachable pole members 6 detachably arranged in a standing condition on said base bar 5, a central cultivation bed-forming member 7 detachably attached to the upper ends of said detachable pole members 6, side cultivation bed-forming members 8 and 9 detachably attached to the intermediate part of the detachable pole members 6, and submerging prevention materials 10 detachably attached to the base bar 5.

### (Base bar 5)

The base bar 5 is a molded body obtained by molding from a metal such as aluminum or plastic, and as shown in Fig. 2, comprises a bar body 11 having an appropriate length and width. The base bar 5 also comprises pole-supporting sections 12, which can detachably arrange and support the lower ends of the detachable pole members 6 in a standing condition, in the vicinity of the opposite ends of the bar body 11 in the length direction. It also comprises submerging prevention material-mounting sections 13 on the opposite sides in the longitudinal direction of the bottom portion of the bar body 11, with a shaft directed in the short width direction of the bar body 11, and vertically penetrating anchor-driving holes 14 at portions located towards the center from the opposite ends in the longitudinal direction of the bar body 11.

The construction of the base bar 5 will now be described in detail.

### (Bar body 11)

In the embodiment, as shown in Figs. 1 and 2, the bar body 11 is formed such that the surface and the framework are constituted by a plurality of plate members to achieve lightweight. However, the present invention is not limited to such a construction, and for example, the bar body 11 may be formed as a solid body.

### (Pole-supporting section 12)

The pole-supporting section 12 is formed such that the lower ends of the detachable pole members 6 can be arranged in a standing condition and supported in the state inclined towards the inner side. It is also possible to arrange and support the detachable pole members 6 in a standing condition substantially vertically. The said pole-supporting section 12 can comprise, for example, a bottom and a cylindrical portion, or the pole-supporting section 12 can be provided with an engagement portion in the cylindrical portion so that it can be fixed by engagement with the detachable pole member 6.

### (Submerging prevention material-mounting hole 13)

The submerging prevention material-mounting holes 13 are formed providing chamfers in the bottom of the bar body 11. However, the present invention is not limited to the said construction, so long as a submerging prevention material 10 is mounted along the ground, and for example, holes can be provided along the ground in the vicinity of the bottom. In this case, it is desirable that the diameter of the holes be set to be the same as or slightly larger than that of the submerging prevention material 10 to prevent the submerging prevention material 10 from being easily pulled out.

It is also possible to form the submerging prevention material-mounting holes 13 so as to be directed towards the longitudinal direction of the bar body 11. However, as in the embodiment, forming the submerging prevention material-mounting holes 13 in the short width direction of the bar body 11, that is, in the direction crossing the bar body 11, make the length of the submerging prevention material 10 short as well as further increasing the stability of the standing frame 2 by the submerging prevention material 10.

As a submerging prevention material 10 mounted to such a submerging prevention material-mounting hole 13, in the embodiment, an appropriate length of metal pipe member made of aluminum or the like is used, but a solid member is usable as well. Further, a submerging prevention material in a rectangular shape or in other shapes, and a plastic submerging prevention material are also usable.

### (Anchor-driving hole 14)

The anchor-driving hole 14 may be provided substantially vertically, or slightly diagonally.

For an anchor (stake) 40 driven into said anchor-driving hole 14, any anchors (stakes) 40 presently used may be used regardless of the shape, so long as it can be driven into the anchor-driving hole 14, as shown in Fig. 2. Moreover, the length of the anchor (stake) 40 can be properly selected.

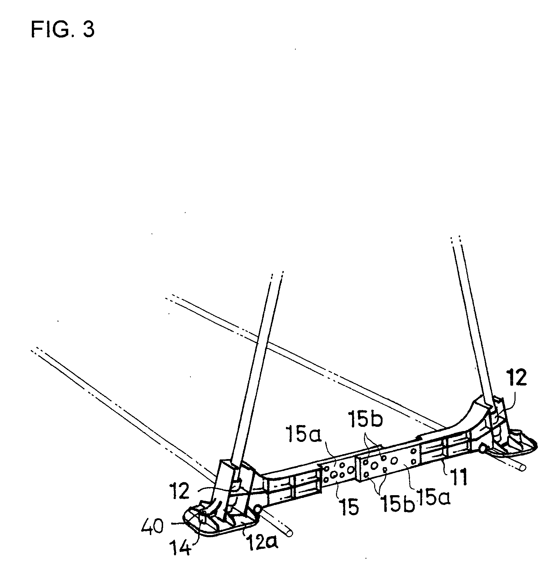

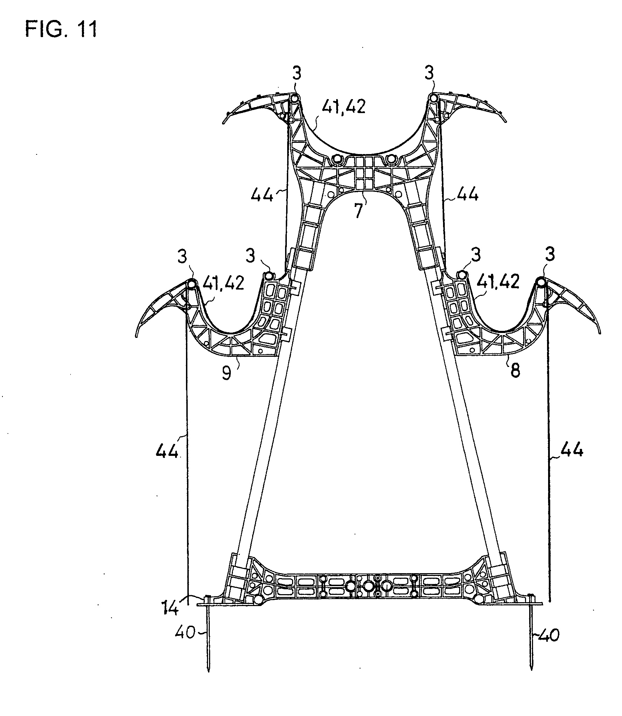

As shown in Figs. 3 and 11, a lower ground seat plate 12a is provided at the lower end, that is, at the foot of each pole-supporting section 12, and the anchor-driving hole 14 may be provided within said ground seat plate 12a, more preferably, outside of the pole-supporting section 12. By arranging the anchor-driving hole 14 outside of the pole-supporting section 12, the anchor (stake) 40 can be driven more easily.

### (Length-adjusting mechanism 15)

The length-adjusting mechanism 15 slidable in the longitudinal direction of the base bar 11 can be provided in the intermediate part of the bar body 11. The length-adjusting mechanism 15 can be constructed by, as shown in Fig. 3, dividing the bar body 11 into two pieces at the intermediate part of the length, providing a bonding plane 15a having an appropriate length in each piece, and providing a plurality of adjusting holes 15b on said bonding plane 15a. By adjusting the length, bonding the respective bonding planes 15a with each other, and inserting and fastening bolts, screws or the like into the adjusting holes 15b, the two pieces can be connected and fixed.

Moreover, the assembly of the frame 1 can be made easy by dividing the bar body 11 into two pieces. If it is tried to arrange the detachable pole members 6 in a standing condition on the base bar 5 fixed on the ground, and thereafter, insert the upper end of each detachable pole member 6 into the pole-mounting section 20 of the central cultivation bed-forming member 7, the insertion may be difficult due to the change in the length of the detachable pole member 6. However, dividing the bar body 11 into two pieces can assemble the frame 1 in the following manner that, fitting by insertion the upper end of each detachable pole member 6 to the pole-mounting section 20 of the central cultivation bed-forming member 7, and mounting each piece of the bar body 11 to the bottom of each detachable pole member 6, thereafter, connecting each piece with each other, while adjusting the length of the base bar 5, and then fixing the base bar 5 on the ground. Therefore, the frame 1 will be easily assembled, regardless of the length of the detachable pole member 6.

The construction of the length-adjusting mechanism is still not limited to the embodiment.

### (Detachable pole member 6)

The detachable pole member 6 can be constructed by one bar member or a pipe member made of metal such as aluminum, or plastic. However, as shown in Fig. 3, a detachable pole member having a construction in which an engagement structure is respectively provided in the upper and lower ends of two pipe members (6A, 6B) having an appropriate length, and these pipe members 6A and 6B are connected in the length direction.

In said detachable pole member 6, the engagement structure between the pipe members 6A and 6B, or between the pipe member 6A and the pole-supporting section 12 can be formed so that inserting one member into the other and rotating it thereof effects engagement.

### (Central cultivation bed-forming member 7)

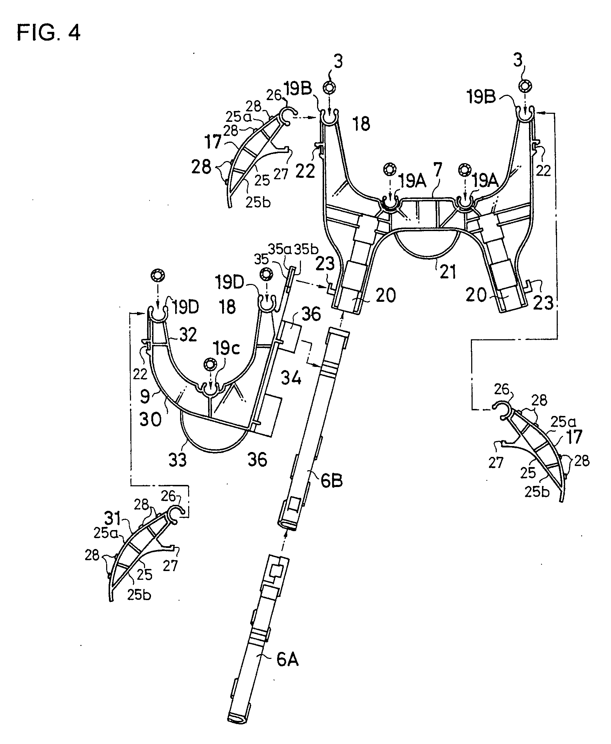

The central cultivation bed-forming member 7 is a molded body obtained by molding from a metal such as aluminum, or plastic, and as shown in Fig. 4, comprises a body 16 having substantially an H shape as seen from the front, and collect-supporting members 17 attached to the right and left sides of this body 16.

### (Body 16)

The body 16 comprises cultivation bed supporting member-holding parts 19A in the inner bottom of a concave portion 18 forming the upper side of the H shape, with an appropriate space between, and cultivation bed supporting member-holding parts 19B at the upper ends of the upper protruding portions on the right and left sides of the concave portion 18. The body 16 also comprises, in each leg of the opposite leg portions forming the lower side of the H shape, pole-mounting sections 20, to which the upper ends of the detachable pole members 6 can be fitted by insertion. Further, the body 16 comprises a U-shaped gutter-supporting section 21 supporting a gutter 4 on the bottom of the concave portion 18 put between the opposite leg portions. On the outer side of the upper protruding portions on the right and left sides of the concave portion 18, there are provided engagement portions 22 having a downward claw in a shape of "¬" provided at an appropriately lower position from the upper end. On the outer side of the opposite leg portions, there are also provided latching female sections 23 in a shape of upward "¬".

The cultivation bed supporting member-holding parts 19 (19A, 19B) are formed in a shape of a groove having a thick wall part at the upper edge of an opening which can be resiliently opened or closed, and the cultivation bed-supporting member 3 can be fitted by insertion with a simple operation by pushing it from the opening.

### (Pole-mounting section 20)

The pole-mounting section 20 is formed slantwise so that the upper end of the detachable pole member 6 can be fitted by insertion in the outward slanting state. However, it may be formed such that the detachable pole member 6 can be fitted by insertion substantially vertically. The said pole-mounting section 20 may have a construction having only a ceiling portion and a cylindrical portion, as well as providing an engagement portion in the cylindrical portion so as to be engaged with an engagement structure provided in the detachable pole member 6 (pipe member 6B).

### (Collect-supporting member 17)

The collect-supporting member 17 comprises, as shown in Figs. 2, 4 and 7, a collect-portion 25 having a shape of the waning moon in cross section having a curved and expanded upper face 25a and a flat lower face 25b. The collect-supporting member 17 also comprises, a fitting and holding part 26 which can be rotatably fitted to the cultivation bed-supporting member 3 at the base end of the collect portion 25, an engagement portion 27 having a claw in a shape of upward "¬" at the tip thereof, on the base end side slantingly downward from the intermediate part of the lower face 25b, and a plurality of appropriately spaced sheet latching sections 28 on the upper face 25a.

The collect-supporting member 17 can be fitted to the body 16 in the downward slanting state by fitting the fitting and holding part 26 by insertion to the cultivation bed supporting member 3 mounted in the cultivation bed supporting member-holding part 19B of the body 16.

With regard to the construction of the collect-supporting member 17, the shape of the collect portion 25 can be optionally formed. By having the curved and expanded upper face, when fitted to the body 16, fruit will be easily put thereon and water can be easily drained.

### (Fitting and holding part 26)

The fitting and holding part 26 is formed in a shape of a groove such that an opening which can be resiliently opened or closed is provided downward and a thick wall part is provided at the upper edge of said opening, so that it can be fitted by insertion to the cultivation bed-supporting member 3 with a simple operation by pushing it from the opening.

### (Engagement portion 27)

The engagement portion 27 is provided corresponding to the engagement portion 22 of the body 16, and also supporting leg of the collect-supporting member 17.

### (Sheet latching section 28)

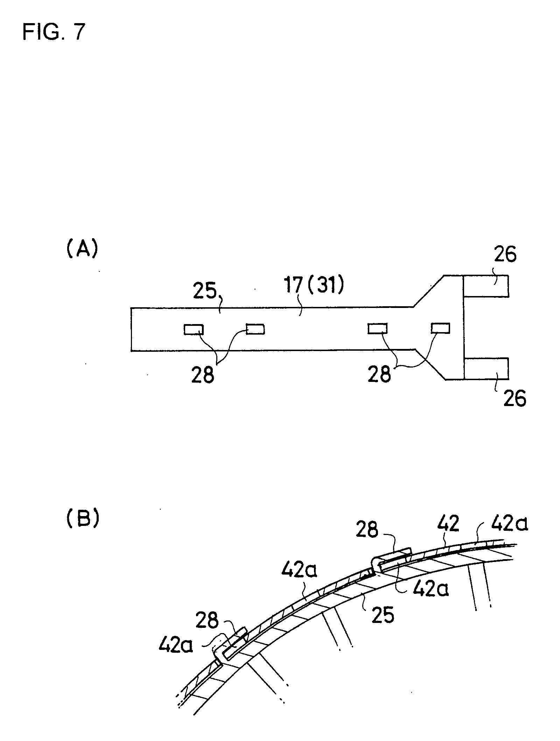

The sheet latching section 28 is formed as a protrusion in a shape of "¬", as shown in Fig. 7, and a shift of the collect sheet 42 can be prevented by engaging a hole 42a provided in the collect sheet 42 with said sheet latching section 28.

Here, the collect-supporting member 17 may be integrally formed with the body 16.

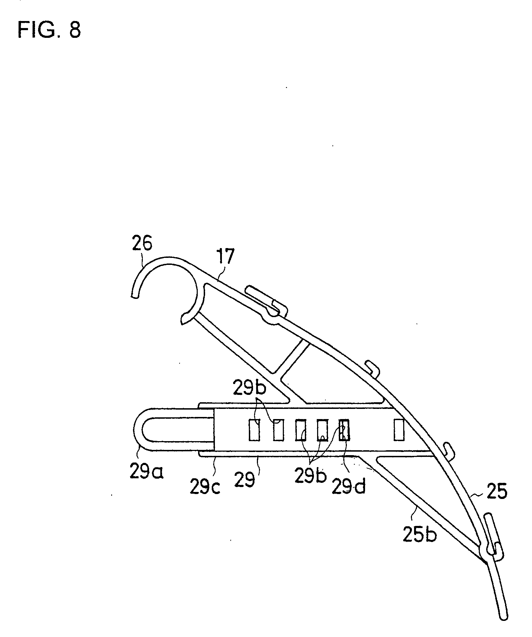

The collect-supporting member 17 may have such a construction that the angle is optionally adjustable. To form the collect-supporting member 17 so as to enable the angle adjustable, as shown in Fig. 8, it may have a supporting arm 29 having an adjustable length, protruded from the intermediate part of the collect portion 25 towards the inside (towards the cultivation bed) with a predetermined angle (in the embodiment, with an angle of from 30 to 45 degrees with respect to the lower face 25b of the collect portion 25 towards the base end side).

### (Supporting arm 29)

In the aforementioned case, the supporting arm 29 comprises, as shown in Fig. 8, a lazy tongs 29a in a shape of a long board in plane with a latching protrusion 29d at one end, a supporting arm body 29c, which is extended from the lower face 25b of the collect portion 25 with the point (in the longitudinal direction of the cultivation bed) being opened, and is provided with a plurality of latching holes 29b on the side thereof, which can latch the appropriately spaced latching protrusion 29d. The lazy tongs 29a fitting slidable in the supporting arm body 29c.

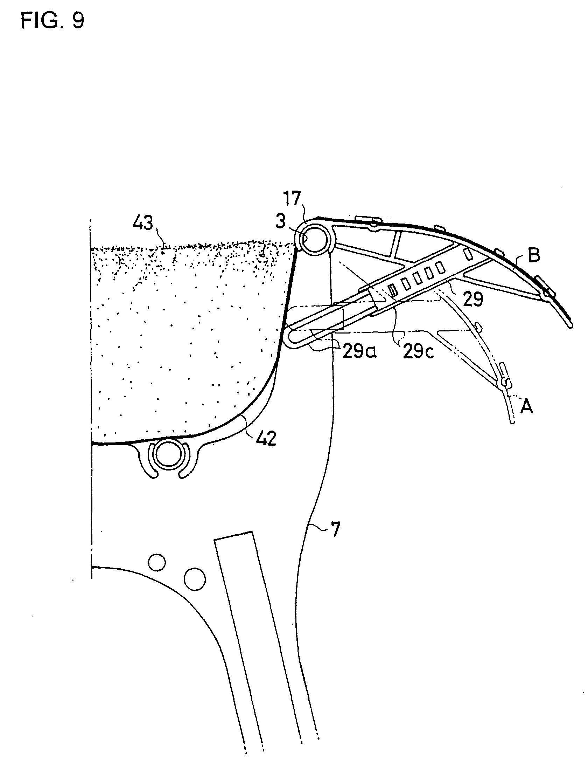

By using the collect-supporting member 17 having such a construction, the collect-supporting member 17 can be fixed in the state with the angle being inclined appropriately, by rotatably fitting the fitting and holding part 26 to an appropriate place of the cultivation bed-supporting member 3, determining the tilt angle of the collect portion 25, adjusting the length of the supporting arm 29 so as to match with the determined tilt angle, as shown by a broken line in Fig. 9, and making the point of the lazy tongs 29a abut against the flank of the cultivation bed, that is, against the outer side of the collect sheet 42.

The structure of the collect-supporting member is not yet limited to the above example.

### (Side cultivation bed-supporting member 8 (9))

The side cultivation bed-supporting member 8 (9) is a molded body obtained by molding from a metal such as aluminum or plastic, and as shown in Fig. 4, comprises a body 30 having a concave shape as seen from the front, and a collect-supporting member 31 attached to the right or left side of said body 30.

### (Body 30)

The body 30 comprises a cultivation bed-supporting member-holding part 19C in the inner bottom of a concave portion 32, and cultivation bed supporting member-holding parts 19D at the upper ends of the upper protruding portions on the right and left sides of the concave portion 32. On the outer side of the concave portion 32 (outer side as seen from the detachable pole member 6), there are provided engagement portions 22 having a downward claw in a shape of "¬" provided at an appropriately lower position from the upper end of the upper protruding portion. On the lower face of the bottom of the concave portion 32, the body 16 comprises a U-shaped gutter supporting section 33 to support a gutter 4. On the inner side (on the detachable pole member 6 side) of the concave portion 32, there is extended a plate portion 35a from the upper end of a cutting plane 34 cutting along the inclination of the detachable pole member 6, and a latching section 35 with an engagement hole 35b is provided in said extended plate portion 35a, and appropriately spaced pole-mounting sections 36 are provided on the cutting plane 34 in the vertical direction.

In the construction of said body 30, the cultivation bed supporting member-holding parts 19C and 19D are formed, and can be formed in the same manner as the cultivation bed supporting member-holding parts 19A and 19B.

### (Engagement portion 22)

The engagement portion 22 has the same structure as that of the engagement portion 22 in the body 16.

The reason why the inner side of the concave portion 32 is made to be the cutting plane 34 along the inclination of the detachable pole member 6 is to arrange the concave portion 32 so as not to be inclined, when the pole-mounting sections 36 formed along said cutting plane 34 are mounted to the detachable pole member 6.

### (Latching section 35)

The latching section 35 is to be formed so as to be able to latch with the latching female section 23 of the body 16. It is desirable to form the position and the shape of the latching section 35 corresponding to the position and the shape of the latching female section 23.

### (Pole-mounting section 36)

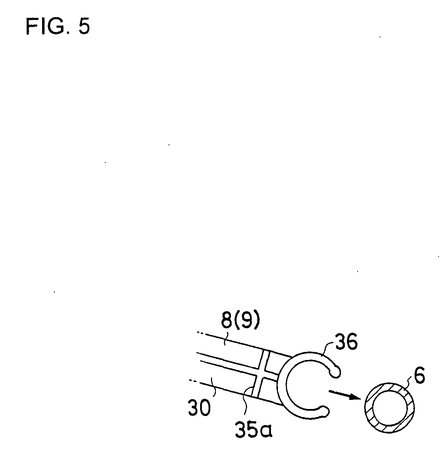

The pole-mounting section 36 has a groove having an opening which can be resiliently opened or closed on the side thereof, as shown in Fig. 5, so as to protrude inwards (towards the detachable pole member 6) along the cutting plane 34, so that it can fit to the detachable pole member 6 with a simple operation by pushing it from the opening. Also, it may be formed in a cylindrical shape into which the detachable pole member 6 is inserted.

### (Collect-supporting member 31)

The collect-supporting member 31 has the same construction as that of the collect-supporting members 17 and 18, and as shown in Fig. 4, it can be fitted to the right or left side of the body 30 as in the collect-supporting members 17 and 18.

### (Cultivation bed-supporting member 3)

As the cultivation bed-supporting member 3, a long-length metal pipe member is used in the embodiment, and it may be used made of plastic or may have a construction connected in the length direction.

### (Gutter 4)

As the gutter 4, a long plastic gutter or a long gutter formed of a plastic film or sheet can be used. Gutters having an appropriate length can be connected in the length direction.

The assembly method of the frame 1 will now be described.

After determining the installation location of the standing frame 2, the base bar 5 mounted with the submerging prevention materials 10 is placed on the ground, and fixed on the ground by driving anchors (stake) 40 into the anchor-driving holes 14.

The lower ends of the pipe members 6A are respectively inserted into the pole-supporting sections 12 in the base bar 5 and fixed, and then, the pipe members 6B are connected to the respective pipe members 6A to arrange two detachable pole members 6 on the base bar in a standing condition in a tapered form toward the top.

The upper ends of these respective detachable pole members 6 are fitted by insertion to the pole-mounting sections 20 in the central cultivation bed-forming member 7, to thereby mount the central cultivation bed-forming member 7 on the detachable pole members 6.

However, providing the length-adjusting mechanism 15 in the bar body 11, as described above, while fitting the upper end of each detachable pole member 6 by insertion to the pole-mounting section 20 in the central cultivation bed-forming member 7 mounts each piece of the bar body 11 to the lower end of each detachable pole member 6, and thereafter, connects each piece with each other, while adjusting the length of the base bar 5, and fixes the base bar 5 on the ground.

As described above, the base bar 5 is fixed on the ground, the detachable pole members 6 are arranged in a standing condition, and the central cultivation bed-forming member 7 is mounted thereon. Thereafter, the latching section 35 of the side cultivation bed-forming member 8 (9) is latched on the latching female section 23 in the central cultivation bed-forming member 7, while the pole-mounting section 36 is fitted to the intermediate part of the detachable pole member 6, to thereby fit the side cultivation bed-forming member 8 (9).

In said manner, after arranging a plurality of appropriately spaced standing frames 2 in a standing condition separately, in total ten cultivation bed-supporting members 3 span between the standing frames 2, in such a manner that each cultivation bed-supporting member 3 is held by the cultivation bed supporting member-holding part 19A, 19B, 19C or 19D in each standing frame 2.

Then, in each of the central cultivation bed-forming member 7 and the side cultivation bed-forming members 8, 9 of each standing frame 2, the fitting and holding part 26 is fitted to the cultivation bed-supporting member 3, and the engagement portion 27 is engaged with the engagement portion 22, to thereby mount the collect-supporting member 17 (31), and the gutter 4 is respectively mounted on the gutter supporting sections 21 and 33. As a result, the frame 1 can be assembled.

The frame 1 having such a construction is assembled using a plurality of lightweight members, and further, fixation means using welding, wire binding, or any other special tools or fastening devices is not required for the assembly thereof, and thus the transportation and installation can be easily done. Moreover, since each standing frame 2 can be fixed by arranging it in a standing condition separately in order, even a large-scale frame can be constructed easily with a few people.

Since the base bar 5 is placed on the ground, fixed on the ground by driving anchors 40 to arrange each standing frame 2 in a standing condition, the arrangement of each standing frame 2 in a standing condition can be performed easy, compared to the case where poles are driven into the ground respectively as in the conventional method. In addition, arranging and fixing each standing frame 2 separately ensures stability without adding a brace, and thus, the construction is easy. Moreover, by pulling out the anchors (stakes) 40 driven into the ground, the installation location of each standing frame 2 is easily adjustable.

Also, since the base bar 5 is placed on the ground and the submerging prevention materials 10 are arranged thereon along the ground, submerging of each standing frame 2 can be reliably prevented, and the overall frame 1 will never become inclined due to submerging as in the conventional method.

The detachable pole members 6 are arranged in a standing condition in a tapered form toward the top, and the base bar 5, the detachable pole members 6 and the central cultivation bed-forming member 7 form a triangle, more correctly, a trapezoid. As a result, the framework strength in each standing frame 2 can be increased. Moreover, since the cultivation bed placed in the middle (central cultivation bed) and the cultivation beds arranged below this (side cultivation beds) can be arranged so that these are not overlapped vertically, it has the great advantage that sunshine can be ensured onto the side cultivation beds.

Further, it is one of the attractive points of the embodiment that the side cultivation bed-forming members 8 and 9 can be easily attached only by latching the latching section 35 with the latching female section 23 in the central cultivation bed-forming member 7, and fitting the pole-mounting sections 36 to the intermediate part of the detachable pole member 6.

Preferably, the end of the gutter 4 is arranged outside the hothouse, so as to guide the received water to the outside of the house. As a result, an excessive increase of humidity inside the hothouse and disease of the growing plant such as powdered mildew will be prevented.

The frame 1 having the above-described construction can be constructed as described below to thereby form an elevated cultivation device.

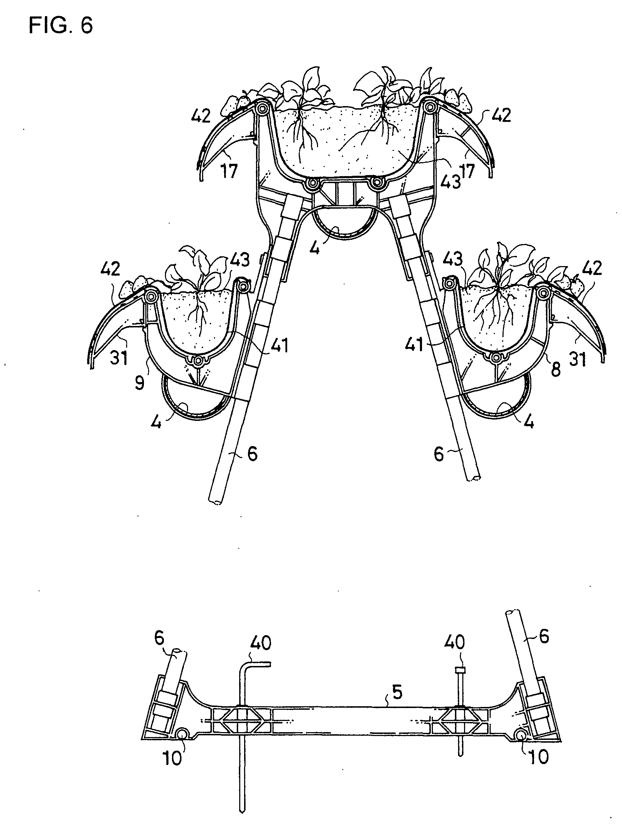

As shown in Fig. 6, in each of the central cultivation bed forming-member 7 and the side cultivation bed-forming members 8 and 9, by spanning a base material sheet 41 between the cultivation bed-supporting members 3 in a form of U-shape (cross section) and filling soil in the base material sheet 41 the central and side cultivation beds are formed. Then, by covering the upper face of each collect-supporting member 17 and 31 with a collect sheet 42, the elevated cultivation device can be formed.

### (Base material sheet 41)

As the base material sheet 41, any optional material can be used, so long as it has the strength to support the soil and a waterproof property, and it is desirable to provide drain holes for draining excessive water.

### (Collect sheet 42)

As the collect sheet 42, it is desirable to use a sheet or a film material having high transparency to improve lighting on the central cultivation bed and the side cultivation beds, or a sheet having a high reflectivity such as aluminum or a sheet formed of a film material, to increase the irradiation efficiency onto the fruit due to diffused reflection from the sheet surface. Further, it is desirable to provide a plurality of holes 42a in the sheet surface, and adhere this sheet over the collect-supporting member 17 (31), so that these holes 42a are latched with the sheet latching sections 28.

If the collect sheet 42 adhered in this manner, a shift of the collect sheet 42 will be prevented, and furthermore, ventilation and drainage will be improved by means of the plurality of holes 42a provided in the sheet surface. For example, burning of the fruit due to a temperature increase on the sheet surface can be also prevented.

A sheet having a network structure (net) is usable as the collect sheet 42. If such a sheet is used, it can be attached by being latched with the sheet latching section 28, without providing a plurality of holes 42a as described above.

The base material sheet 41 and the collect sheet 42 can be fixed to the cultivation bed-supporting members 3, by fitting fixation clips (not shown) to the cultivation bed-supporting members 3 from over the base material sheet 41 and the collect sheet 42.

### (Gutter supports 21 and 32)

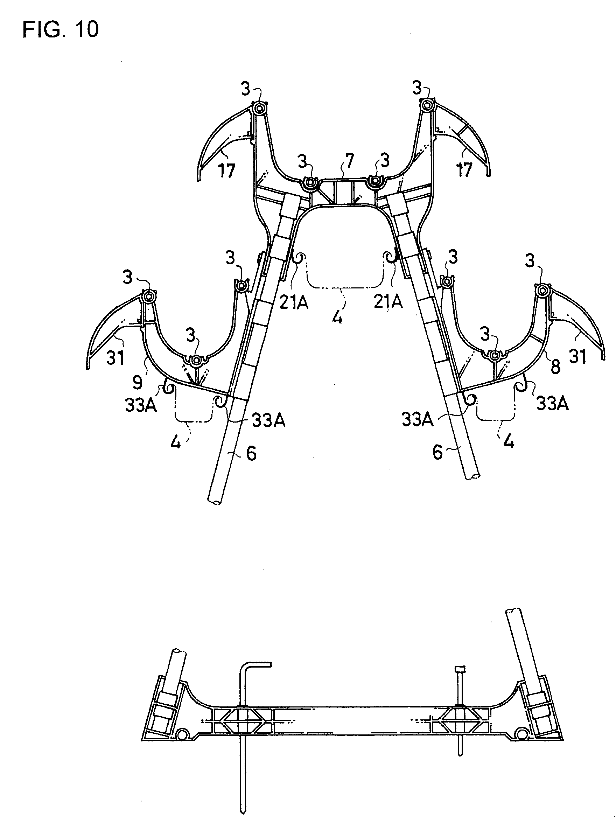

The gutter supports 21 and 32 can be constructed, as shown in Fig. 10, such that hook-like protrusions 21A and 31A are formed in pair respectively, and the edge of the gutter is latched by each hook-like protrusion 21A (31A) so that the gutter 4 is suspended. Moreover, the gutter supports 21 and 32 can be constructed by fitting the gutter 4 inclined in a certain direction so that water can easily flow therein.

### (Weather-resistant sheet 44)

Assuming a case where the frame 1 is installed outside, there is a possibility that the plastic parts, for example, the central cultivation bed-forming member 7 and the side cultivation bed-forming members 8, 9 may deteriorate due to ultraviolet rays. Therefore, as shown in Fig. 11, it is desirable that at least the outside of the central cultivation bed-forming member 7 and the side cultivation bed-forming members 8, 9 be covered with a weather-resistant sheet 44 which can absorb or reflect ultraviolet rays.

The weather-resistant sheet 44 can be attached, as shown in Fig. 11, by winding and fixing the upper ends of the weather-resistant sheet 44 on the cultivation bed-supporting members 3 located at the upper ends of the upper protruding portions of the central cultivation bed-forming member 7 so as to hang downwards without fixing the lower ends , or by winding and fixing the lower ends thereof on the cultivation bed-supporting members 3 located at the inside upper ends of the respective upper protruding portions of the side cultivation bed-forming members 8 and 9. Moreover, the lower weather-resistant sheet 44 can be attached by winding and fixing the upper ends of the weather-resistant sheet 44 on the cultivation bed supporting members 3 located outside of the respective upper protruding portions of the side cultivation bed-forming members 8 and 9 so as to hang downwards without fixing the lower ends, or by fixing the lower ends by driving anchors into the ground.

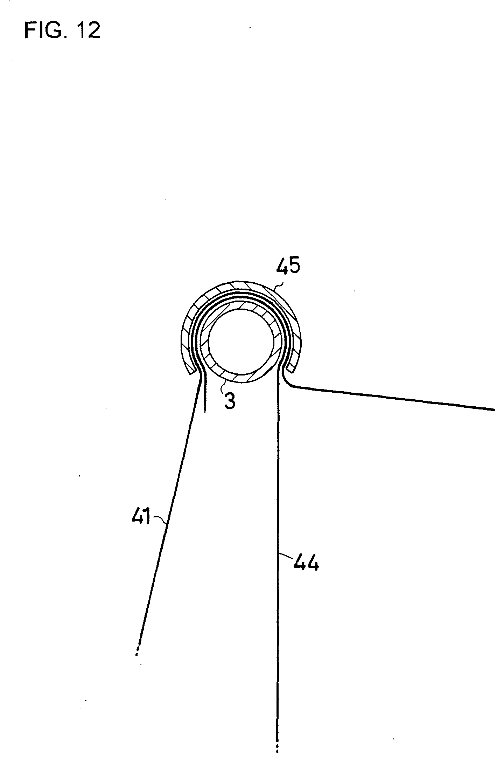

When the weather-resistant sheet 44 is wound and fixed on the cultivation bed supporting members 3, as shown in Fig. 12, the weather-resistant sheet 44 is fitted and fixed on the cultivation bed supporting member 3, together with the collect sheet 42, using a fixation clip 45 comprising an opening which can be resiliently opened or closed, having a C-shape in cross section, which can be fitted with a simple operation.

Pores can be provided in the weather-resistant sheet 44 so that draining is possible and air can pass through.

## Claims

1. A frame for an elevated cultivation device comprising:
a plurality of appropriately spaced standing frames arranged in a standing condition, and
cultivation bed supporting members span between the standing frames, wherein
each standing frame has a ground base member placed on the ground, detachable pole members arranged in a standing condition on said ground base member, and a cultivation bed-forming member supported by said detachable pole member.

2. A frame for an elevated cultivation device according to claim 1, further comprising a side cultivation bed-forming member, wherein
said side cultivation bed-forming member comprises a detachable pole member-mounting section and a latching section on the right or left side, so that said latching section is latched with the cultivation bed-forming member, and said detachable pole member-mounting section is mounted to the intermediate part of the detachable pole member so as to be freely detachable.

3. A frame for an elevated cultivation device according to claim 1 or 2, wherein
said ground base member comprises detachable pole-supporting sections that can support the lower ends of the detachable pole members so as to be arranged in a standing condition; and
said cultivation bed-forming member comprises a pole-mounting section, to which the upper ends of the detachable pole members can be inserted and fitted.

4. A frame for an elevated cultivation device according to claim 1, 2 or 3, wherein two detachable pole members are arranged in a standing condition in a tapered form toward the top on said ground base member.

5. A frame for an elevated cultivation device according to claim 1, 2, 3 or 4, wherein said ground base member comprises anchor-driving holes, and anchors are driven into said anchor-driving holes, to thereby fix the ground base member on the ground.

6. A frame for an elevated cultivation device according to claim 1, 2, 3, 4 or 5, wherein said ground base member comprises submerging prevention material-mounting sections, and submerging prevention material is mounted on each submerging prevention material-mounting section so that said submerging prevention material is arranged along the ground.

7. A frame for an elevated cultivation device according to claim 1, 2,3, 4, 5 or 6, wherein said ground base member comprises a length-adjusting mechanism.

8. A frame for an elevated cultivation device according to claim 1, 2, 3, 4, 5, 6 or 7, wherein said cultivation bed-forming member or said side cultivation bed-forming member, or both comprise a collect-supporting member protruded to support fruit, and a sheet latching sections are provided on the surface thereof.

9. A frame for an elevated cultivation device according to claim 1, 2, 3, 4, 5, 6, 7 or 8, wherein said cultivation bed-forming member or said side cultivation bed-forming member, or both comprise a collect-supporting member protruded to support fruit, and constructed so that the tilt angle thereof can be adjusted.

10. A frame for an elevated cultivation device according to claim 8 or 9, wherein said collect-supporting member comprises a collect portion, a fitting and holding part provided at the base of the collect portion and rotatably attached, and a supporting arm protruded from the intermediate part of the collect portion with an appropriate angle so that the length can be adjusted.

11. A frame for an elevated cultivation device according to claim 1, 2, 3, 4, 5, 6, 7, 8, 9 or 10, wherein said cultivation bed-forming member or said side cultivation bed-forming member, or both comprise a gutter-supporting section at the bottom.

12. A frame for an elevated cultivation device according to claim 1, 2, 3, 4, 5, 6, 7, 8, 9, 10 or 11, further comprising a weather-resistant sheet suspended from the cultivation bed-supporting member, so as to cover the side of said cultivation bed-forming member, or of the side cultivation bed-forming member or the sides of these cultivation bed-forming members.
